# EUROPEAN PATENT APPLICATION

(11) **EP 1 591 940 A1**
(43) Date of publication of application: **02.11.2005**
(21) Application number: 05103420.5
(22) Date of filing: 27.04.2005
(51) Int. Cl.: G06F 17/60

(54) **Arrangements and methods for computer based decision support**

(30) Priority: 28.04.2004 SE 0401108; 28.04.2004 US 521449 P
(71) Applicant: Stream VPN Ltd., London W1H 7AA (GB)
(72) Inventor: Mattsson, Johan Stream VPN Ltd., Beaconsfield, Buckinghamshire HP9 2ST (GB)
(74) Representative: Herbjörnsen, Rut

(57) **Abstract**

The present invention relates to computer arrangements and methods for investment decision support. An advice database comprises a plurality of records for storing advice messages relating to pieces of investment advice. An advice evaluation mechanism is operable to use a set of criteria having at least one variable parameter for evaluating an advice message by determining the variable parameter in response to the advice message, checking whether the plurality of records fulfill the set of criteria and generating an evaluation result based on the result of the checking. A criteria optimization mechanism can be used to optimize the set of criteria to be used in the advice evaluation mechanism.

## Description

### Field of the invention

The present invention relates to the field of computer-based decision support in general, and to computer-based investment decision support in particular.

### Background

Traditionally, if a fmancial advisor were to give financial advise to a manager of financial assets, the fmancial advisor would make a telephone call or send an e-mail to the manager of financial assets. Since the amount of advice received by a manager of fmancial assets over time is usually very large, the administration of the advice is very cumbersome and the evaluation of the advice highly inefficient.

### Summary

A problem to which the present invention relates is how to obtain a decision support apparatus by which the accuracy in the evaluation of investment advice can be increased.

This problem is addressed by a computer arrangement for investment decision support, wherein the computer arrangement has access to an advice database comprising a plurality of records for storing advice messages representing pieces of investment advice. The computer arrangement is characterised by an interface operable to receive an advice message to be evaluated in the computer arrangement; storage adapted to store a set of criteria having at least one variable parameter; and an advice evaluation mechanism coupled to the storage and to the advice database. The advice evaluation mechanism is operable to evaluate the advice message by determining the value of the at least one variable parameter in response to the received advice message; checking whether the plurality of records fulfil the set of criteria. The advice evaluation mechanism is further operable to generate an evaluation result based on the result of the checking.

The problem is also addressed by a method of evaluating investment advice in a computer arrangement having access to an advice database comprising a plurality of records for storing advice messages representing pieces of investment advice. The method is characterised by: receiving a set of criteria having at least one variable parameter; storing the set of criteria in a storage; receiving an advice message to be evaluated by use of the set of criteria; determining the value of the at least one variable parameter in response to the received advice message; checking whether the plurality of records fulfil the set of criteria; and generating an evaluation result (q, 330, 340) based on the result of the checking.

By the inventive computer arrangement and method is achieved that the accuracy of investment advice evaluation is increased. By using information on other pieces of advice in the evaluation of an advice message, a prediction can be made, with increased accuracy, as to whether the piece of investment advice to which the advice message relates is good or bad.

The efficiency of investment decision-making can hence be greatly improved. A user of the computer arrangement will receive investment information that is more reliable than the investment advice that was input in the computer arrangement. Furthermore, the time spent on making an investment decision will be reduced, since the computer system provides the user with information of increased reliability, and an investment decision can therefore be made with less hesitation. Furthermore, the interface between a sender of investment advice and the receiver of investment advice can be greatly improved, and both the sender and the receiver of investment advice are provided with a tool for efficiently administering the advice.

In one embodiment of the invention, the advice evaluation mechanism of the computer arrangement is further operable to, in response to receiving the advice message, identify at least one further advice message to be evaluated by the advice evaluation mechanism, and for each identified further advice message: determine the value of the at least one variable parameter in response to the identified further advice message; check whether the plurality of records fulfil the set of criteria; and generate a further criteria checking result. The advice evaluation mechanism is further operable to generate the evaluation result further based on the at least one further criteria checking result. In this aspect of the invention, the inventive method further comprises identifying at least one further advice message to be evaluated by the advice evaluation mechanism, and for each identified further advice message: determining the value of the at least one variable parameter in response to the identified further advice message; checking whether the plurality of records fulfil the set of criteria; and generating a further criteria checking result. The evaluation result generated in the step of generating is then further based on the at least one further criteria checking result.

Hereby is achieved that the criteria checking result of a further piece of advice, often received before the first piece of advice, is updated as the first piece of advice, possibly affecting the result of the evaluation of the further piece of advice, is received. The evaluation result can thus be based on up-to-date criteria checking results concerning further pieces of advice which have been received prior to the reception of the first piece of advice.

In one aspect of the invention, the computer arrangement further comprises storage for storing a condition for generating a system generated advice message. The computer arrangement further comprises a condition checking mechanism operable to check whether said evaluation result fulfils the condition for generating a system generated advice message. The computer arrangement is operable to generate a system generated advice message based on the evaluation result when the evaluation result fulfils the condition for generating a system generated advice message, and the computer arrangement further comprises an interface operable to output the system generated advice message.

In this aspect of the invention, the inventive method comprises: checking whether the evaluation result fulfils a condition for generating a system generated advice message stored in said computer arrangement; and generating a system generated advice message based on the evaluation result if the evaluation result fulfils the condition for generating a system generated advice message.

Hereby is achieved that a user of the computer arrangement can receive system generated advice messages generated when a predetermined condition, preferably determined by the user, is fulfilled. An automatic notification of the user when the evaluation result fulfils a predetermined condition speeds up the process of the user receiving investment information from the computer arrangement, thus improving the efficiency of the computer arrangement. Since investment information is often very sensitive to time, the immediate notification of a user of the enhanced/refined investment information increases the probability of the user making investment decisions which will yield a positive economic result.

In one aspect of the invention, the computer arrangement further comprises storage for a list of criteria checking results, wherein a criteria checking result in the list of criteria checking results is resulting from an advice message having been evaluated by the advice evaluation mechanism. In this aspect of the invention, the advice evaluation mechanism is further operable to store the result of the checking in the list of criteria checking results, the list of criteria checking results forming part of said evaluation result. In this aspect, the inventive method comprises storing the result of the advice message being evaluated in by the advice evaluation mechanism in a list of criteria checking results.

Hereby is achieved that a list of the criteria checking result is provided, providing a means for easily identifying the most desirable criteria checking results and their associated advice objects or advice messages.

The invention further relates to a computer program product comprising computer program code operable to executing the inventive method when run on a computer arrangement.

The problem is further addressed by a computer arrangement for handling of investment advice having access to an advice database comprising a plurality of records, wherein a record comprises storage for storing information on an advice object of a piece of investment advice and storage for storing information on the time of reception of the piece of investment advice. The computer arrangement further comprises an input for receiving information on the prices of different advice objects at different points in time. The computer arrangement also comprises storage for an investment condition and a criteria optimisation mechanism operable to optimise a set of criteria for evaluating a piece of investment advice. The optimisation mechanism is operable to optimise a set of criteria for evaluating a piece of investment advice, the optimisation mechanism being operable to use records of the advice database, in combination with the investment condition and information on the historical prices at different points in time of the advice objects of the used records, in order to generate an optimised set of criteria.

Hereby is achieved that an optimal set of criteria for evaluating a piece of investment advice can be generated, based on the historical performance of the pieces of advice stored as records in the advice database. Thus, when the optimised set of criteria is used for evaluating advice, the evaluation result will provide a basis for investment decision support which, if followed, will greatly increase the probability of a positive result from economic investments.

The computer arrangement comprising an optimisation mechanism can advantageously be coupled to the above described computer arrangement comprising an evaluation mechanism. The evaluation mechanism can then be provided by an optimised set of criteria from the optimisation mechanism.

In one embodiment of the computer arrangement comprising the optimisation mechanism, criteria optimisation mechanism is operable to optimise the set of criteria by repeatedly: checking a plurality of advice objects of records retrieved from the database against an interim set of criteria, thus obtaining a plurality of criteria checking results; temporarily selecting advice objects in response to said plurality of criteria checking results by applying the investment condition; generating a measure of the return of the temporarily selected advice objects by use of the information on the historical prices at different points in time of said temporarily selected advice objects; and selecting a new interim set of criteria. The criteria optimisation mechanism of this aspect is further operable to identify an optimal interim set of criteria, yielding an optimal return, and to select said optimal interim set of criteria as the optimised set of criteria.

In another embodiment of the computer arrangement comprising the optimisation mechanism, the criteria optimisation mechanism is operable to check the price, at different historical times, of advice objects of records retrieved from the database; to identify at least one advice object that would have yielded a desirable economic return during a period of time; and to adapt the set of criteria so that, by application of the set of criteria in combination with the investment condition on the retrieved advice objects, the at least one identified advice object would have been selected during the period of time when the at least one identified advice object would have yielded a desirable economic return.

The problem is further addressed by a method for handling of investment advice in a computer arrangement having access to an advice database comprising a plurality of records, wherein a record comprises storage for storing information on an advice object of a piece of investment advice and storage for storing information on the time of reception of the piece of investment advice. The method comprises receiving, in the computer arrangement, an instruction to optimise a set of criteria to be used for evaluation of investment advice; retrieving, from the advice database, a plurality of records, said records comprising information on advice objects; and optimising the set of criteria to be optimised by use of the plurality of records in the advice database in combination with an investment condition and information on the historical prices at different points in time of the advice objects of the plurality of records so as to generate an optimal set of criteria. The problem is further addressed by a computer program product comprising computer program code, operable to operable to execute this method when run on a computer arrangement.

### Brief description of the drawings

Fig. 1 shows an embodiment of an advice administration system comprising an advice database.
Fig. 2a illustrates an example of an advice message.
Fig. 2b illustrates an example of a record in an advice database.
Fig. 3 schematically illustrates a system for investment decision support comprising an advice administration computer, an advice evaluation computer and a criteria generation computer.
Fig. 4a is an example of a set of criteria to be used by the advice evaluation computer.
Fig. 4b is a flowchart schematically illustrating the functioning of a criteria checking mechanism of an advice evaluation computer.
Fig. 5 illustrates an example of a system generated advice message.
Fig. 6 is a flowchart schematically illustrating the functioning of an embodiment of an advice evaluation computer.
Fig. 7 is a diagram illustrating an example of communication between a sender client computer, an advice administration computer, an advice evaluation computer and receiver client computers.
Fig. 8 is a flowchart schematically illustrating the functioning of an implementation of a criteria optimisation mechanism of a criteria generation computer.
Fig. 9 is an example of a set of criteria which could be used by one embodiment of a criteria optimisation mechanism.

### Detailed description

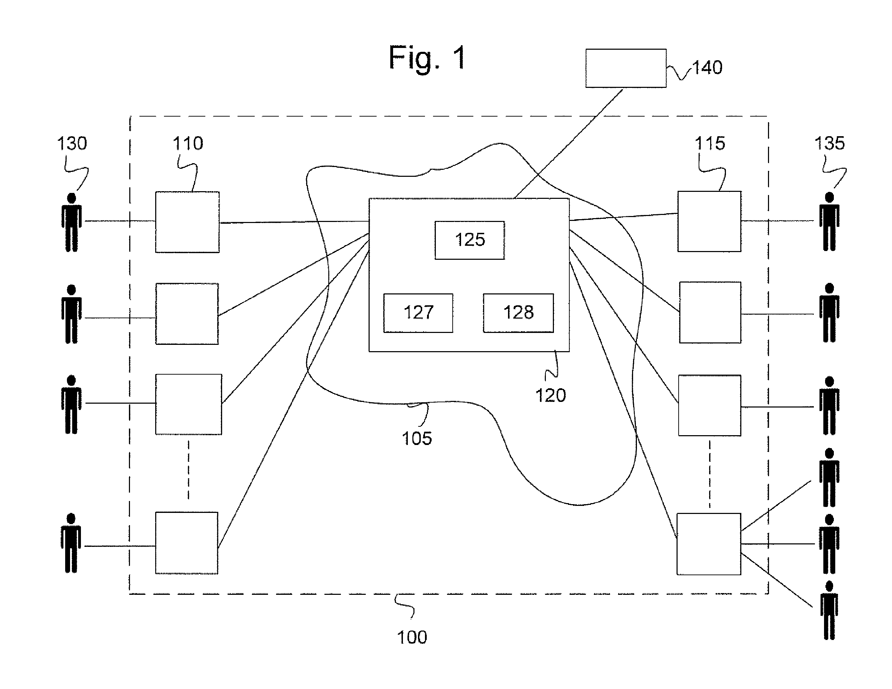

A system 100 for the transmission of advice over a network 105 is schematically illustrated in Fig. 1, and will hereinafter be referred to as advice administration system 100. Network 105 could *e.g.* be the Internet, a private network, leased lines or a combination thereof. Advice administration system 100 comprises a plurality of sender client computers 110 and a plurality of receiver client computers 115. The sender client computers 110, as well as the receiver client computers 115, are connected, via network 105, to an advice administration computer 120. In many implementations, sender client computers 110 and receiver client computers 115 will be personal computers and can be used in other applications as well. Advice administration computer 120 preferably comprises a communication mechanism 125 for communicating with the client computers 110 and 115, and/or with any other computers connected to advice administration system 100. The communication mechanism 125 comprises an input for receiving at least advice messages 200 sent by users of the client computers 110 via a user interface, and an output for outputting at least information to be communicated to users of receiver client computers 115. Communication between client computers 110/115 and advice administration computer 120 could advantageously be performed by use of the Hyper Text Transfer Protocol (HTTP), or via an encrypted version of HTTP known as HTTPS. Communication mechanism 125 would then comprise a web-server. However, communication between the advice administration computer 120 and the client computers 110 and 115 does not have to be web-based, but could *e.g.* be implemented as client-server communication using any communication protocol. Communication mechanism 125 preferably also comprises a messaging mechanism such as a Simple Messaging Transfer Protocol (SMTP) server for sending messages to users of client computers 110/115. Advice administration computer 120 preferably further comprises an application mechanism 127 comprising necessary software for performing the functionality of advice administration computer 120, and an advice database 128.

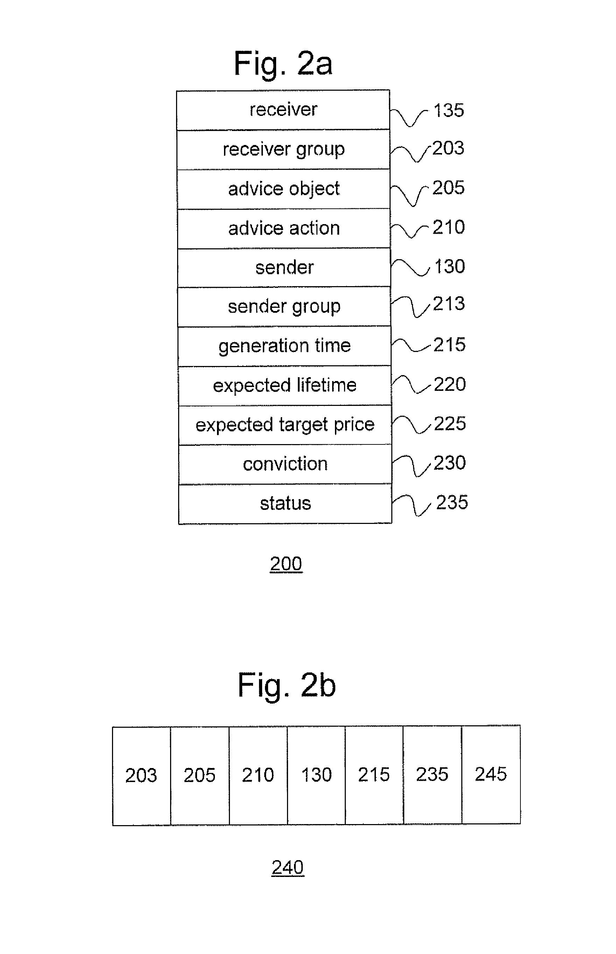

A user 130 of a sender client computer 110, hereinafter referred to as sender 130, could use advice administration system 100 for sending investment advice to a user 135 of a receiver client computer 115, hereinafter referred to as receiver 135. **In Fig. 2a, an example of a** **typical advice message 200 is illustrated**, advice message 200 of Fig. 2a comprising information on a piece of investment advice given to a receiver 135 by a sender 130. A piece of investment advice generally relates to an advice object, i.e. a financial asset to which the piece of investment advice relates (e.g. a particular equity, bond, or derivative, such as an option, or another financial asset, e.g. gold or wheat), and an advice action, which can either be "buy" or "sell", or possibly "keep". A piece of investment advice could furthermore relate to a set of advice objects with individual advice actions: "sell equity A and buy equity B".

Advice message 200 of Fig. 2a comprises data fields for the following pieces of information: receiver 135, receiver group 203, advice object 205, advice action 210, sender 130, sender group 213, generation time 215, expected lifetime 220, expected target price 225, conviction 230 and status 235. The term receiver group 203 is here to be understood as a group of receivers 135 entitled to share the information in an advice message 200. All receivers 135 of a receiver group 203 may not necessarily receive a copy of the advice message 200, but, if the advice message 200 is stored in advice database 128, all receivers 135 that belong to the receiver group 203 specified in advice message 200 will be allowed to view advice message 200. Similarly, the senders 130 in a sender group 213 specified in an advice message 200 would be allowed to view the advice message 200 when stored in advice database 128. The status 235 if an advice message 200 can be used to indicate whether the advice message 200 relates to a new piece of advice, the alteration of a piece of advice previously sent in an advice message 200, or the closure of a piece of advice previously sent in an advice message 200. In a fmancial embodiment of the invention, advice object 205 could *e.g.* be "equity A", "bond B" or "derivative C", advice action 210 could be "sell", "buy", or "keep", and conviction 230 could *e.g.* be "high", "medium" or "low". The invention could also be applied in other investment scenarios, such as the buying and selling foreign exchange instruments or commodities such as electricity, gold, oil, wheat *etc.*

Advice message 200 could comprise other data fields than the ones shown in Fig. 2a. For example, advice object 205 and advice action 210 could be combined into one data field; generation time 215, expected lifetime 220, expected target price 225, conviction 230 could be omitted or replaced; receiver 135 or receiver group 203 could be omitted, as could sender 130 and/or sender group 213 *etc.* Further data fields could be added, such as *e.g.* a data field for the inclusion of bodytext and/or attachments. In Fig. 2a, for purposes of illustration only, advice message 200 is illustrated to be a single message. However, depending on the transmission protocol used to transmit the information in advice message 200, advice message 200 could be transmitted as one or more messages/reply-requests.

Fig. 2b illustrates an example of a record 240 in advice database 128 corresponding to the advice message 200 of Fig. 2a. A record 240 could contain the same data fields as an advice message 200, or could comprise parts of the data fields of an advice message 200, and could furthermore comprise data fields not included in an advice message 200. The record 240 of Fig. 2b comprises data fields for storage of receiver group 203, advice object 205, advice action 210, sender 130, generation time 215, status 235 and the price 245 of advice object 205, the price 245 of advice object 205 being stored as *e.g.* the price of advice object 205 at the generation time 215, or as the average price of advice object 205 over a period time (preferably starting at the generation time 215). A record 240 of advice database 128 could comprise other data fields than the ones illustrated in Fig. 2b, and does not have to include all the data fields illustrated in Fig. 2b.

**Referring back to Fig. 1**, communication mechanism 125 and application mechanism 127 preferably comprise software such that a sender 130 may send advice messages 200 to several different receivers 135, and a receiver 135 may receive advice messages 200 from several different senders 130. A sender 135 may send advice messages 200 to receivers 135 of different receiver groups 203, and a receiver 125 can receive advice messages from senders 135 of different sender groups 213.

When a sender 130 sends an advice message 200 to a receiver 135 via advice administration computer 120, advice administration computer 120 preferably stores the advice message 200 as a record 240 in the advice database 128. Moreover, advice administration computer 120 sends the advice message 200 to receiver 135, *e.g.* as an e-mail or via a chat-system used by receiver 135. In an alternative embodiment, sender client computer 110 sends the advice message 200 directly to a receiver/s 135, and at the same time sends a copy of advice message 200 to administration computer 120, which stores information on advice message 200 as a record 240 of advice database 128. Hence, advice database 128 preferably includes any advice message 200 sent from a sender 130 to a receiver 135. Communication mechanism 125 and application mechanism 127 preferably comprise software such that a sender 130 (receiver 135) at any time can consult the advice administration computer 120 for information on advice messages 200 which have previously been sent (received) by sender 130 (receivers 135) or other senders 130 (receivers 135) belonging to the same sender group 213 (receiver group 203), and to view such previously sent (received) advice messages 200. A sender 130 of an advice message 200 can, in one implementation of advice message 200, specify which receiver group 203 and/or sender group 213 should have access to the advice message 200 sent to a receiver 135, *cf.* Fig. 2a.

Advice database 128 could *e.g.* be implemented using a relational database. However, any database, or any apparatus providing storage possibilities, such as one or several files, could be used.

In addition to the information included in an advice message 200, advice administration computer 120 could store supplemental information relating to the advice messages 200 in advice database 128, *cf.* data field 245 of Fig. 2b. Such supplemental information could either be generated by advice administration system 100, or imported from external sources of information 140. Supplemental information on the price of the advice object 205 of an advice message 200 could preferably be included, as well as information on the return achieved, had the advice in advice message 200 been followed (such information would not be known at the time of creation of a new advice message 200). Furthermore, information regarding any advice category that the advice object 205 of an advice message 200 sorts under could be included. Examples of advice categories could be geographical area, financial sector, *etc.* An advice object 205 could e.g belong to the classes "England" and "Europe" in an advice category "geographical area", and to the class "telecommunication" in an advice category "financial sector".

In one implementation, the advice database 128 could furthermore store information about which senders 130 and receivers 135 are allowed to send, receive and view advice messages 200 on the advice administration computer 120, possibly including restrictions on which receivers 135 a sender 130 can send advice messages 200 to, and on which senders 130 a receiver 135 can receive advice messages 200 from.

Advice administration computer 120 could advantageously comprise software such that a receiver 135 can choose any particular classes, within one or several advice categories, that receiver 135 would like to receive advice messages 200 sorting under. For example, if a receiver 135 has specified that he/she would like to receive advice messages 200 sorting under the class "Sweden" in the advice category "geographical area", receiver 135 would then receive any advice messages 200 relating to Sweden which is sent to a receiver group 203 to which receiver 135 belongs, even when receiver 135 has not been specified as receiver 135 of the advice message 200.

The advice administration system 100 greatly improves the efficiency of investment decision-making and of advice administration. Since all advice messages 200 are efficiently organised in advice database 128, a user 130/135 of advice administration system 100 can easily keep track of, and view, the advice messages 200 that have been sent and/or received. Furthermore, a historical evaluation of advice received/given can easily be performed, once the outcome of the recommended advice action 210 on advice object 205, had the advice message 200 been acted upon, becomes known. Thus, an evaluation of the performance of different investment advisors 130 can easily be made.

In many situations, some kind of evaluation of the advice messages 200 is necessary already upon reception of an advice message 200. This is *e.g.* the case if receiver 135 receives more advice messages 200 than receiver 135 can, or wants to, act upon. The receiver 135 will not necessarily know whether an advice message 200 received is good or not, i.e. whether or not receiver 135 should act according to the advice message 200.

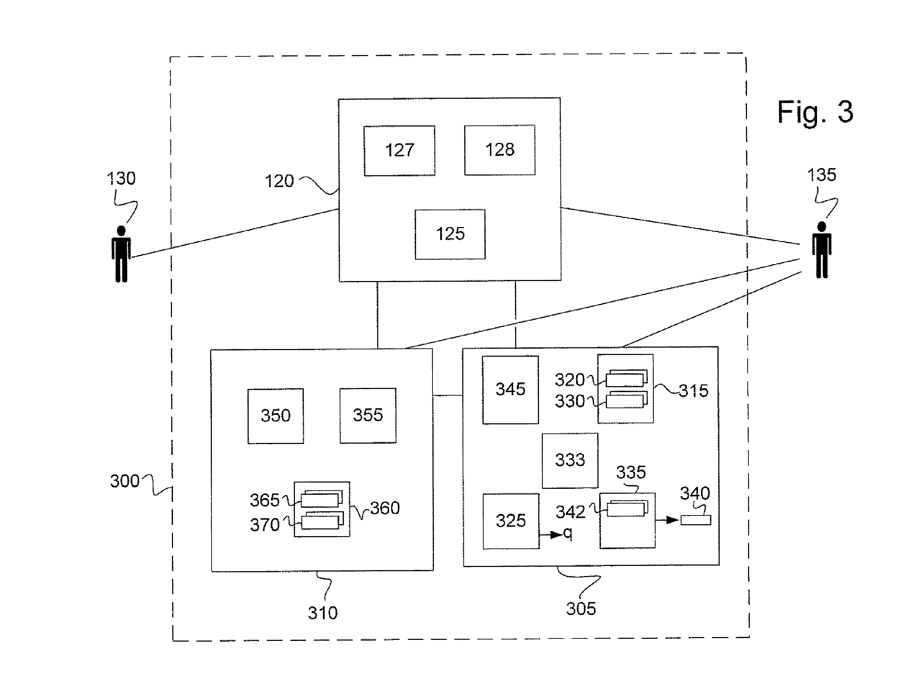

**A schematic block diagram of a system 300 for investment decision support is shown in Fig. 3**. System 300 for investment decision support, hereinafter referred to as system 300, is illustrated in Fig. 3 as comprising an advice administration computer 120, an advice evaluation computer 305 and an criteria generation computer 310, the advice administration computer 120, the advice evaluation computer 305 and the criteria generation computer 310 being interconnected. Advice evaluation computer 305 is, *inter alia,* for evaluating a received advice message 200, using records 240 of the advice database 128 relating to advice messages 200, as will be further described below. Criteria generation computer 310 is for generating criteria which can *e.g.* be used by advice evaluation computer 305 when evaluating advice messages 200. When generating such criteria, criteria generation computer 310 uses information about a large number of records 240 in advice database 128 to find an optimal set of criteria which would single out desirable pieces of advice when applied to the large number of records 240.

Advice evaluation computer 305 and criteria generation computer 310 preferably comprise a communication mechanism 345 and a communication mechanism 355, respectively, for communication with entities within system 300 for investment decision support, and with entities connected to system 300 for investment decision support, including users of system 300. Communication mechanisms 345 and 355 each comprises at least one input and one output for inputting and outputting information. Advantageously, a user of system 300 can also be a receiver 135 in advice administration system 100, as illustrated in Fig. 3. Communication within system 300 for investment decision support can advantageously be implemented by use of a request-response based protocol, such as *e.g.* HTTP or HTTPS, in combination with a message protocol such as *e.g.* SMTP. Communication mechanisms 345 and 355 can hence advantageously comprise a web-server for web-based communication and an SMTP server for sending and receiving messages. However, any suitable communication protocol(s) can be used by system 300 for investment decision support. If other protocols than HTTP/HTTPS and SMTP are used by system 300 for investment decision support, communication mechanisms 345 and 355 will be implemented accordingly.

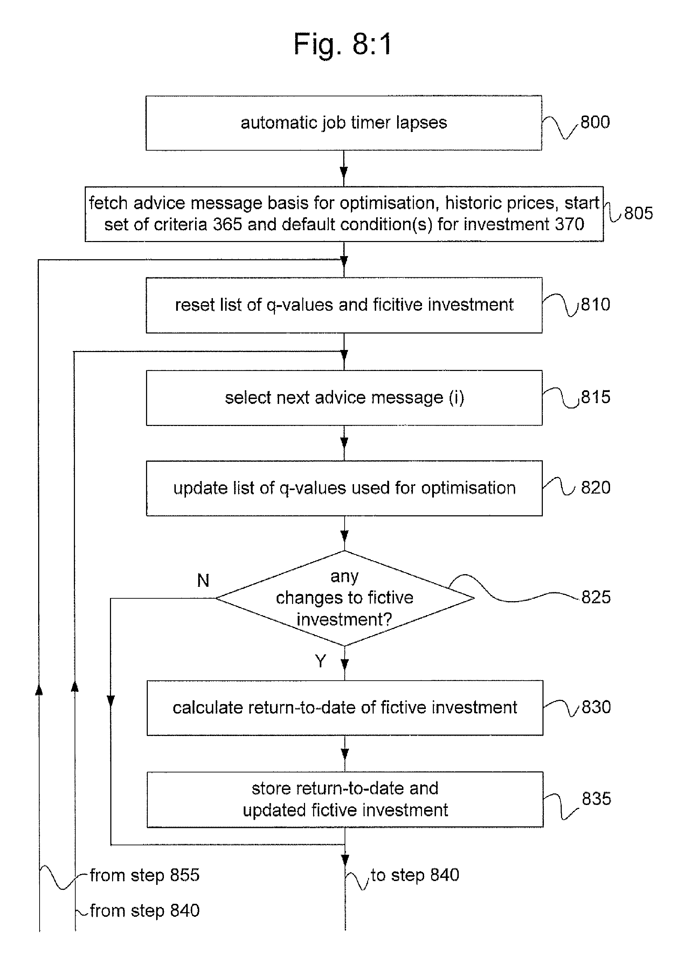

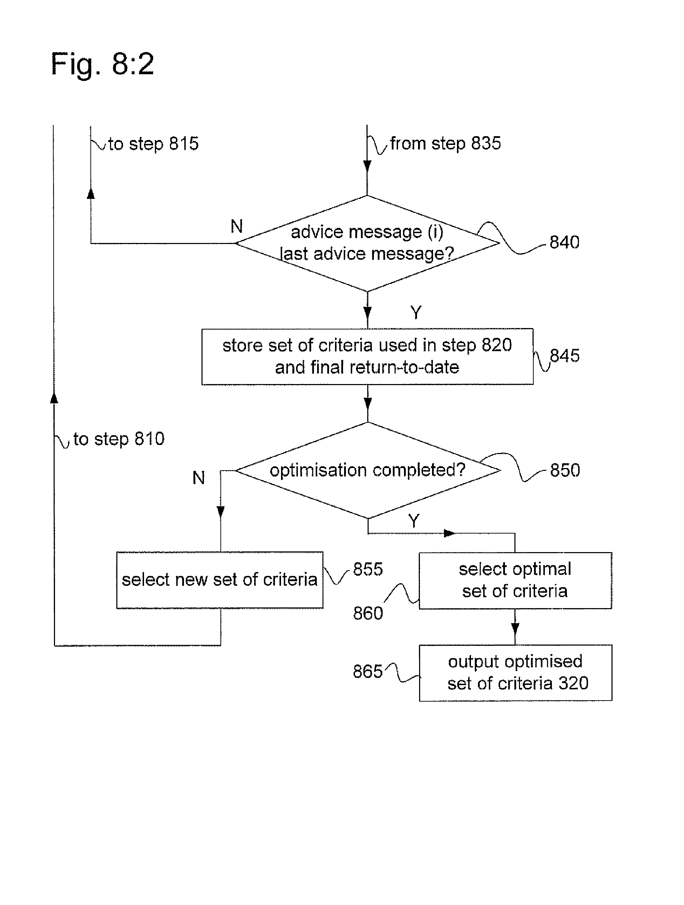

Advice evaluation computer 305 preferably provides storage for at least one set of criteria 320, against which an advice message 200 may be checked. Such storage could *e.g.* be in a memory 315. The set of criteria 320 can either be input in advice evaluation computer 305 manually via a user interface, or may advantageously be generated and input by criteria generation computer 310, as will be described in more detail in relation to Fig. 8.

Advice evaluation computer 305 preferably further comprises a criteria checking mechanism 325 for checking whether a set of criteria 320 is fulfilled.

A set of criteria 320 could comprise one or more criteria. Advantageously, a set of criteria 320 refers to contents of the advice database 128, so that contents of the advice database 128 is used when an advice message 200 is evaluated by use of the set of criteria 320. Preferably, a criterion relates to a property of a subset of records 240 in advice database 128, wherein the characteristics of the advice message 200 to be evaluated are used in determining the subset of records 240. For example, a criterion of the set of criteria 320 could refer to the performance of pieces of advice, stored as records 240, in the same financial sector as the advice message 200 to be evaluated; to the performance of pieces of advice sent by the same sender; to the number of pieces of advice relating to the advice action "buy" in the same geographical area as the advice message 200; or to any property of a subset of records 240 of the advice database 128 which may be defined by the characteristics of an advice message 200.

Preferably, each receiver 135 is associated with a set of criteria 320 by which an advice message 200, intended for receiver 135, can be evaluated. Several receivers 135, such as *e.g.* a receiver group 203, can be associated with the same set of criteria 320. Likewise, a receiver 135 can be associated with more than one sets of criteria 320, *e.g.* if the receiver 135 manages a number of different investment portfolios with different investment strategies. A set of criteria 320 could advantageously be user specific and associated with either an individual receiver 135 or to a receiver group 203.

When an advice message 200 is evaluated in the criteria checking mechanism 325, the criteria checking mechanism 325 could advantageously generate a value of a parameter q associated with the advice message 200, where the value of the parameter q, or q-value, depends on which criteria, in the set of criteria 320, that are fulfilled. In its simplest form, the q-value reflects how many of the criteria, in set of criteria 320, that are fulfilled. If the set of criteria 320 is well constructed, the parameter q can be used to compare the quality of the advice message 200 with the quality of other advice messages 200, *i.e.* how advantageous it would be to follow the advice of advice message 200 compared to how advantageous it would be to follow advice of other advice messages 200. In an alternative embodiment, the q-value generated by the criteria checking mechanism can be associated with the advice object 305 of the advice message 200, rather than with the advice message 200 itself, or the advice action 210 on the advice object 205 of an advice message 200, or with any other definition of the piece of advice contained in an advice message 200.

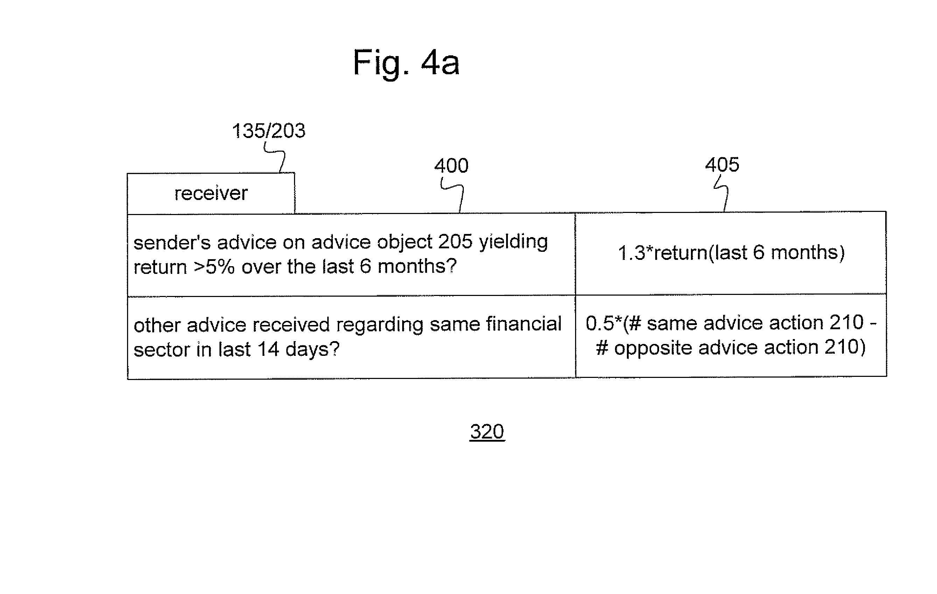

**In Fig. 4a**, an example of a set of criteria 320 is presented. A set of criteria 320 can contain any number of criteria, and the criteria can be of any type. Column 400 of Fig. 4a contains a description of each criterion, and column 405 contains a relation by which a value can be obtained, said value to be added to the parameter q associated with advice object 205 of advice message 200 (or with the advice message 200 itself, depending on implementation, as discussed above), if the corresponding criterion in column 400 is fulfilled. Set of criteria 320 in Fig. 4a also comprises a data field for storing information on which receiver 135/receiver group 203 is associated with the set of criteria 320, and a set of criteria 320 may comprise further data fields, such as date of generation *etc.* A plurality of sets of criteria 320 can be stored in advice evaluation computer 305, and each receiver 135 is preferably associated with a set of criteria 320, which should be applied by criteria checking mechanism 325 when an advice message 200 is sent to receiver 135. Several receivers 135 can be associated with the same set of criteria 320, such as the receivers 135 within a receiver group 203. For purposes of illustration only, the criteria in the set of criteria 320 of Fig. 4a concerns the selling or buying of financial securities, and the resulting q-value is a quality measure of the advice object 205 of advice message 200.
A set of criteria 320 could, in addition to referring to the contents of advice database 128, also refer to other types of information, such as *e.g.* technical analysis of the variation over time of the price of the advice object 205 to be checked by the set of criteria. System 300 could then have an input connected to a system providing such information.

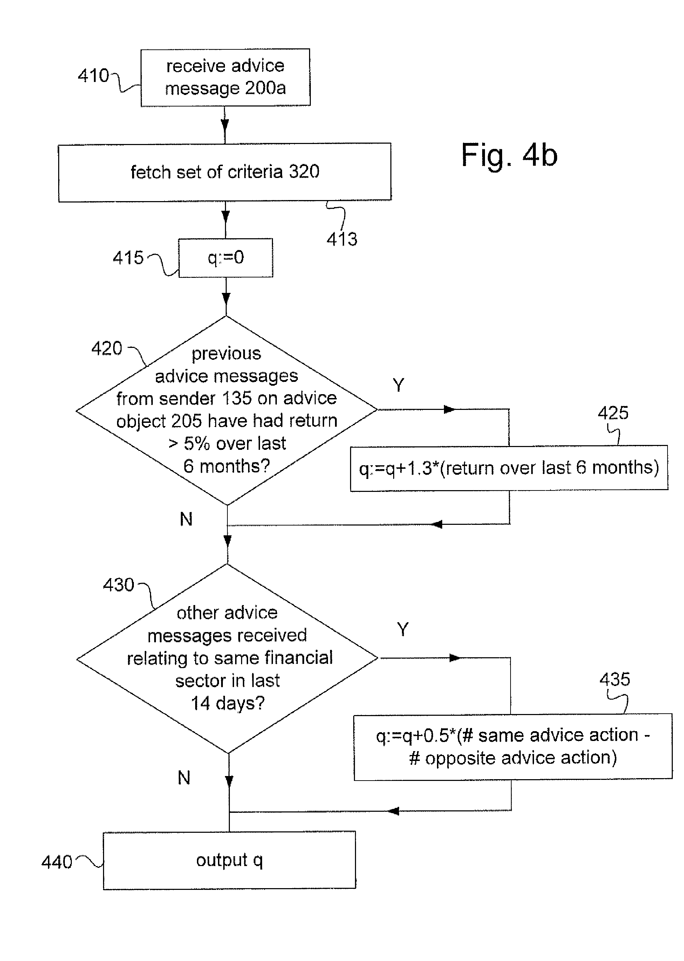

**Fig. 4b** is a flowchart schematically illustrating how the criteria checking mechanism 325 generates a value of parameter q according to the set of criteria 320 of Fig. 4a. In step 410, an advice message 200a is received in criteria checking mechanism 325, advice message 200a relating to advice object 205a and having been sent by sender 135a. Criteria checking mechanism 325 can perform the criteria checking on any advice message 200 received from any entity: An advice message 200 may for example be input directly to criteria checking mechanism 325 by a user of criteria checking mechanism 325 via a user interface, be sent to criteria checking mechanism by a sender 130 via the advice administration computer 127, or be sent from advice database 128 on demand and comprise information on a record 240 stored in advice database 128. In the following, an embodiment will be described in which the advice message 200a is received from advice administration computer 120.

In step 413, criteria checking mechanism 325 fetches the set of criteria 320 that should be used. In order to identify the relevant set of criteria 320, criteria checking mechanism 325 may have to check to which receiver 135, or receiver group 203, the advice message 200a is addressed. Alternatively, the set of criteria 320 can be input to the criteria checking mechanism 325 together with advice message 200a, or the same set of criteria 320 is used for all users of system 300.

In step 415, the value of the parameter q is set to zero. Step 420 is then entered, in which the advice message 200a is checked against the first criterion in the set of criteria 320 of Fig. 4a: Have other advice messages 200 (stored as records 240 in advice database 128) received from sender 135a on the same advice object 205 yielded a return greater than 5% over the last year? If in step 420 it is found that this criterion is not fulfilled, then step 430 is entered. However, if it is found that the advice message 200a fulfils the criterion of step 420, then step 425 is entered. In step 425, the q-value is increased by the value specified in column 405 of Fig. 4a, *i.e.* 1.3 times the return over the last 6 months of other advice messages 200 received from sender 135a and relating to advice object 205a. Step 430 is then entered.

In step 430, advice message 200a is checked against the second criterion in the set of criteria 320 of Fig. 4a: Have any other advice messages 200 been received, in the last 14 days, relating to advice objects 205 belonging to the same class in the advice category "financial sector" as advice object 205a? If not, step 440 is entered, in which the value of q is output. However, if the criterion checked in step 430 is fulfilled, step 435 is entered, in which the q-value is increased by the value specified in column 405 of Fig. 4a, *i.e.* 0.5*[the number of advice messages 200 received in the last 14 days relating to the same advice action 210 (*e.g.* sell) as advice message 200 - the number of advice messages received in the last 14 days relating to the opposite advice action 210 (buy being the opposite to sell) as advice objects 205]. Step 440 is then entered, in which the value of q is output.

A criterion in a set of criteria 320 preferably has at least one variable parameter, which varies depending on the advice object 205 of the advice message 200 being checked. A criterion may have further variable parameters, which may e.g. depend on the time of checking, or the sender of the advice message 200. For example, the first criterion of Fig. 4a has the variable parameters "sender", "advice object" and "last 6 months". If an advice message 200, relating to equity A and sent by Mr. B, is to be checked on the 1^{st} of September, the criterion would be "Has Mr. B's advice on equity A yielded a return of more than 5 % since the 1^{st} of March?". The receiver group 203 could serve as an implicit parameter, applicable to all advice messages 200 being checked against the set of criteria 320. If the set of criteria 320 illustrated by Fig. 4a would apply to the receiver group "Fund Managing company C", the relevant criterion would then be "Has Mr. B's advice to members of Fund Managing Company C on equity A yielded a return of more than 5 % since the 1^{st} of March?". Other implicit parameters may also be applied.

The checking of an advice message 200 against a criterion of a set of criteria 320 involves determining the value of any variable parameters of the criterion in accordance with the characteristics of the advice message 200 and other relevant information, such as the time of the checking, and then checking the records of advice database 128 to see whether the criterion is fulfilled. In other words, for each criterion, a subset of the database 128 is selected, and then compared with the criterion to see whether the criterion is fulfilled, where the subset is determined in accordance with the values of the variable parameter(s) relevant for the advice message 200 being checked. In case of the example given in the previous paragraph, the selected subset would be all advice messages relating to equity A having been received by Fund Managing Company C from Mr. B since the 1^{st} of March, and the criterion would be fulfilled if the selected subset would have yielded a return greater than 5% had the pieces of advice been followed.

Advice evaluation computer 305 advantageously further comprises, for each set of criteria 320, storage for a list of q-values 330. Such storage could *e.g.* be part of memory 315. In the following, it will be assumed that a q-value is associated with an advice object 205.
A list of q-values 330 preferably comprises q-values relating to several advice objects 205 having been checked against the set of criteria 320 to which the list of q-values is associated. In addition to q-values, a list of q-values 330 furthermore preferably comprises the advice objects 205 to which the q-values relate. In embodiments where the q-value is associated with an advice message 200, the list of q-values could comprise q-values relating to several advice messages 200 and the corresponding advice message 200.

The q-value output in step 440 of Fig. 4b, together with the advice object 205a, to which the q-value is associated, can hence preferably be stored in a list of q-values 330 associated with the set of criteria 320 of Fig. 4a. If the advice object 205a is already present in the list of q-values 330, the q-value associated with advice object 205a in the list of q-values 330 may be replaced by the newly calculated q-value. However, if any of the criteria of the set of criteria 320 depends on a variable parameter which may vary between different advice messages 200 relating to the same advice object 205, the q-value associated with a previously received advice message 200 relating to the same advice object 205 may be re-calculated. This could e.g. be the case if the criterion depends on the variable parameter "sender 130 of the advice message 200". Different ways of selecting which q-value to store in the list of q-values 330 in such cases may be implemented.

Since the criteria in a set of criteria 320 preferably refers to other advice objects 205 than the advice object of advice message 200a, the receipt of advice message 200a in step 410 may cause a change in the q-values stored in the relevant list of q-values 330. Hence, in a preferred embodiment of the invention, some or all of the q-values stored in a list of q-values 330 are re-calculated when a new advice message 200, which should be checked against the set of criteria 320 associated with list of q-values 330, is received. In one embodiment of the invention, all the q-values in the list of q-values 330 are re-calculated upon reception of a new advice message 200. In another embodiment, the criteria of set of criteria 320 are checked to fmd out which q-values can have been affected by the reception of a new advice message 200. For example, when the set of criteria 320 of Fig. 4a are used by criteria checking mechanism 325, the q-values directly affected upon receipt of a new advice message 200 are the q-values that are associated with advice objects 205 that belong to the same financial sector as the advice object 205 of the new advice message 200. However, the q-values of other advice objects 205 in a list of q-values 330 associated with the set of criteria 320 of Fig. 4a may also have changed since the last time the q-values were updated, since the first criterion of Fig. 4a is has a variable parameter which depends on time (last 6 months).

The q-values of the advice objects 205 that have to be re-calculated are then preferably re-calculated in criteria checking mechanism 325, see Fig. 4b, steps 415-440. The list of q-values 330 is then up-dated. The list of q-values 330 can contain any number of q-values with associated advice objects 205 (or associated advice messages 200, if applicable).

Advice evaluation computer 305 preferably further comprises an advice generation mechanism 335 which, based on the result from the criteria checking mechanism 325, can generate a system generated advice message 340. A condition 342 that should be fulfilled for a system generated advice message 340 to be generated could preferably be stored in advice generation mechanism 335, such condition 342 hereinafter referred to as condition 342 for generating a system generated advice message. Such condition 342 for generating a system generated advice message could preferably be receiver specific, either on an individual receiver basis, or on a receiver group basis, and each set of criteria 320 could advantageously be associated with a condition 342 for generating a system generated advice message. One condition 342 for generating a system generated advice message could *e.g.* be that the q-value resulting from an advice object 205 being checked against the set of criteria 320 to which the condition 342 is associated is higher than a predetermined number. The system generated advice message 340 can then advantageously comprise information on advice object 205, the associated q-value and advice message 200 comprising the advice object 205. Another example of a condition 342 for generating a system generated advice message is whether the reception of an advice message 200 causes any changes to the corresponding list(s) of q-values 330, such as the addition of a new advice object 205 to the list of q-values 330, or changes to the relative order of magnitude of the q-values associated with different advice objects 205 in the list of q-values 330. A system generated advice message 340 could then preferably comprise information relating to such changes. Another example of a condition 342 for generating a system generated advice message is whether a received advice message 200 causes changes to which B advice objects 205 have the highest q-values, *B* being a predetermined number. The contents of the system generated advice message 340 could then *e.g.* be "advice *object X* no longer included in the top B advice objects, and advice object *Y* has entered the top B advice objects having a q-value of "q"". Other conditions 342 for generating a system generated advice message may be used, including the condition that an advice message 200 has been checked in criteria checking mechanism 325, so that a system generated advice message 340 is generated as soon as an advice message 200 has been checked in the criteria checking mechanism 325. Furthermore, in a financial embodiment, for example, it may be desirable for a manager of fmancial assets to obtain a certain value-at-risk for the managed assets. Hence, in an embodiment of the invention where system 300 can estimate the risk involved with each advice object 205, the combination of risks and q-values can be considered in order to determine whether a system generated advice message 340 should be generated.

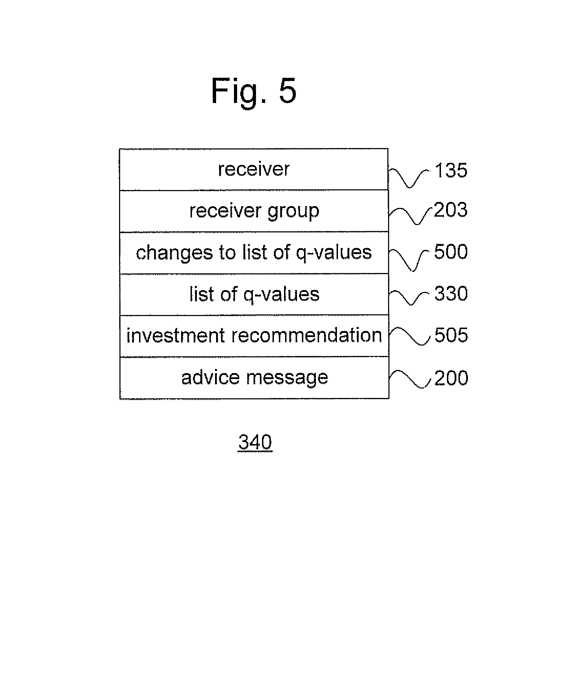

The contents or format of system generated advice message 340 could preferably be user specific, either on an individual basis, or on a receiver group basis. **An example of a system generated advice message 340 is shown in Fig. 5**. The system generated advice message of Fig. 5 comprises data fields for the following pieces of information: receiver 135, receiver group 230, changes 500 to list of q-values, list of q-values 330, investment recommendation 505 and advice message 200 which initiated the changes 500 to the list of q-values 330.

The investment recommendation 505 contained in the exemplary system generated advice message 340 of Fig. 5 could advantageously be generated by use of a predetermined investment condition stored in advice evaluation computer 305. Such an investment condition could be the same condition as the condition 342 for generating a system generated advice message, or different, and could *e.g.* be "Change the portfolio if the 10 European advice objects 205 having the highest q-value have changed, or if the 10 US advice objects 205 having the highest q-values have changed". The investment recommendation 505 associated with such an investment condition could *e.g.* be "Invest 4% of the portfolio in each of the 10 European advice objects 205 having the highest q-values, 4% in each of the 10 US advice objects 205 having the highest q-values and 4% extra in each of the top 5 q-values", the investment recommendation 505 stating which advice objects 205 are at the top in Europe and the US. Such an investment condition could be formulated in a number of different ways, and could include desired risk, desired volume of portfolio, *etc.* An investment condition as discussed above could be manually input in advice evaluation computer 305, or could be received from another entity of system 300 for investment decision support, such as *e.g.* from the criteria generation computer 310, as will be discussed below. The investment recommendation 505 could include changes to previous investment recommendations generated by the application of the above discussed investment condition, and/or a recommendation for the entire contents of the portfolio, and the investment recommendation 505 could be expressed in *e.g.* percentage or a specific currency. An example of an investment recommendation 505 could be "the system recommends to sell advice object X, and buy advice object Y for a total value of a% of your total portfolio.

A system generated advice message 340 could comprise other data fields than the example system generated advice message 340 shown in Fig. 5, and does not have to include all the data fields illustrated in Fig. 5.

In an embodiment of the invention in which system 300 for investment decision support has access to information on the present contents of the investment portfolio of a receiver 135 (alt. receiver group 203) of the system generated advice message 340, system 300 could automatically send a trading message to a system for trade, the trading message containing an instruction to act according to the investment recommendation 505. This would result in an investment occurring very soon after the system generated advice message 340 has been generated, and hence the process of acting upon an investment recommendation 505 of a system generated advice message 340 would be sped up. System 300 could be implemented so that a trading message is sent every time changes to the investment recommended by the system 300 occurs, or when a specific condition is fulfilled. Furthermore, the sending of the trading message could be implemented so that the trading message is automatically sent to a system for trade, but a manual acceptance from a receiver of system generated advice message 340 is required for the system for trade to actually act upon the trading message.

In an embodiment where a trading message can be sent to one of several trading systems, or comprise information on which financial trader is to perform the trade, an evaluation of the records of the advice database 128 can advantageously be used in order to determine which trader is to perform the trade resulting from a trading message, so that the trade can be performed by a trader associated with an advisor which has proved to give good investment advice.

**Now referring back to Fig. 3**, advice evaluation computer 305 comprises, in one embodiment of system 300 for investment decision support, an evaluation database 333, in which information on system generated advice messages 340 is stored, *cf.* the advice database 128 of advice administration computer 120. Evaluation database 333 may store supplemental information associated with a system generated advice message 340, such as the time of generation *etc.* Evaluation database 333 can preferably further be used for storing the most recent list of q-values 330 associated with a set of criteria 320, and a history of old list of q-values 330 (*e.g.* one list of q-values per day). Advice evaluation computer 305 preferably comprises software so that a user of system 300 can, at any point in time, make a request to view data stored in the evaluation database 333. Such requests could *e.g.* be placed from a user client computer (such as *e.g.* user client computers 110 and 115 of Fig. 1) to the communication mechanism 345 of advice evaluation computer 305 by use of HTTP or HTTPS. Preferably, advice evaluation computer 305 comprises software so that a user of system 300 can only view data of evaluation database 333 that he/she is authorised to view. Advice evaluation computer 305 can advantageously be connected, either directly or via advice administration computer 120, to further sources of information, so that the a user of system 300 can request a combination of data stored in evaluation database 333 and other information. In a financial embodiment, such other information could *e.g.* include the performance of system generated advice messages 340, had the system generated advice messages 340 been acted upon, such as prices of the advice object 205 of the system generated advice message 340 at different points in time. Memory 315 could advantageously be part of evaluation database 333, so that evaluation database 333 provides storage for sets of criteria 320 and lists of q-values 330.

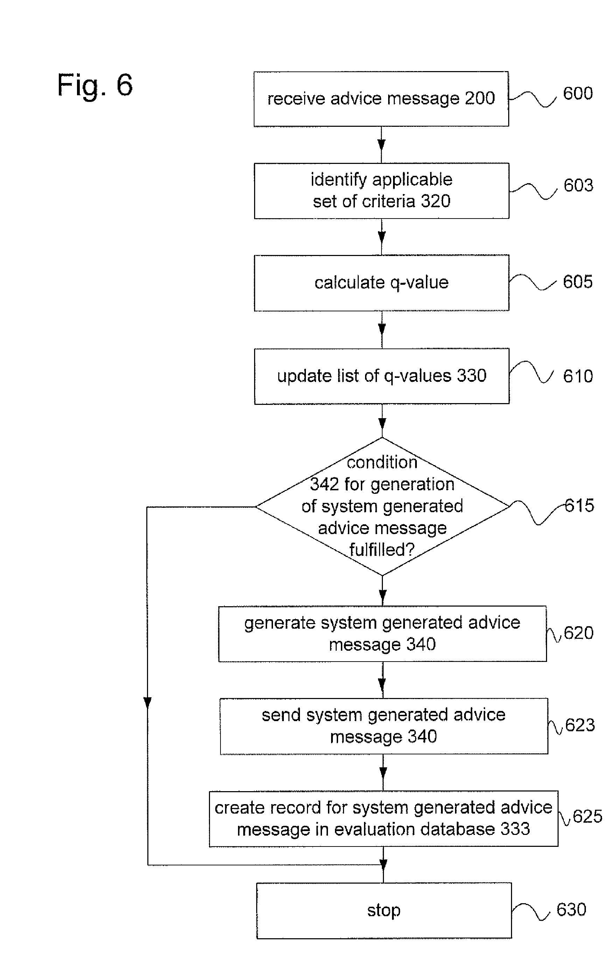

**Fig. 6** is a flowchart schematically illustrating the evaluation mechanism of an example of an advice evaluation computer 305. In step 600, an advice message 200 is received. Advice message 200 could e.g. be received from an advice administration computer 120, or directly from a user of advice evaluation computer 305, depending on implementation. In step 603, the set of criteria to be used for the criteria checking of advice message 200 is identified, by means of checking the data field of advice message 200 corresponding to receiver 135 and/or receiver group 203. In step 605, a q-value is calculated in criteria checking mechanism 325 by use of the set of criteria 320 identified in step 603 in a manner described in relation to Fig. 4b. A list of q-values 330, associated with set of criteria 320 identified in step 603, is then up-dated in step 610. The updating of the list of q-values involves storing the q-value calculated in step 605, as well as re-calculating and storing the q-values associated with advice objects 205, already stored in list of q-values 330,for which the q-value may have changed.. In step 615, it is checked whether the condition 342 for generation of a system generated advice message, associated with the set of criteria 320, is fulfilled. If not, the flow is stopped in step 630. However, if the applicable condition 342 for generating a system generated advice message is fulfilled, then a system generated advice message 340 is generated in step 620. In step 623, the system generated advice message is sent to the predetermined receivers 135. In step 625, a record is created in evaluation database 333, the record comprising information relating to system generated advice message 340. Step 630 is then entered, in which the flow is stopped. The flow shown in Fig. 6 is given by way of example only, and could be changed in many ways. The step 615 of checking whether a condition 342 is fulfilled could be omitted, and a system generated advice message 340 could be generated every time a new advice message 200 is received in system 300 for investment decision support, or no system generated advice message 340 is ever generated. As discussed above, the sending of a trading message to a system for trade could be included, *etc.*

In Fig. 6, the updating the list of q-values 300 performed in step 610 is performed upon the reception in step 500 of a new advice message 200 by system 300 for investment decision support. The updating of a list of q-values 300 could also be triggered by other events, such as the flow of time, so that updating of the list of q-values 300 is performed at certain time intervals.

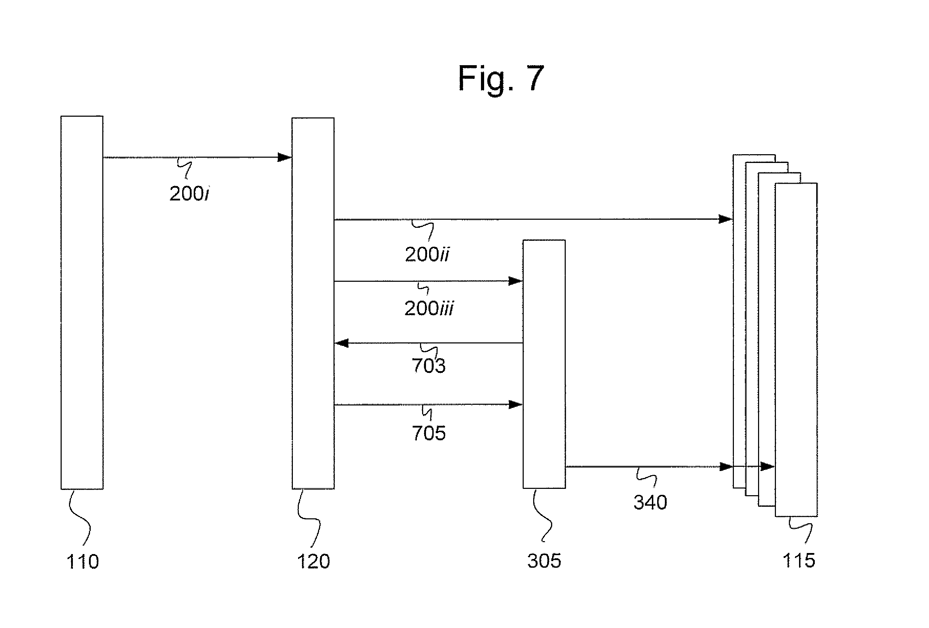

**Fig. 7** schematically illustrates an example of an exchange of messages within an embodiment of system 300 for investment decision support. A sender client computer 110 sends an advice message 200 to the advice administration computer 120, illustrated as advice message 200i in Fig. 7. Advice message 200 can advantageously be transmitted from sender client computer 110 to advice administration computer 120 by use of HTTP or HTTPS, but any suitable protocol for transmission could be used.

When advice administration computer 120 receives the advice message 200, a record 240 is preferably created in advice database 128, the record 240 comprising information on the advice message 200. Furthermore, advice administration computer 120 advantageously checks the data field of advice message 200 where the receiver(s) 135 of advice message 200 is specified, and sends advice message 200 to the appropriate receiver client computer(s) 115, illustrated by advice message 200*ii* in Fig. 7. Advice message 200 can preferably be transmitted from advice administration computer 120 to the receiver client computer(s) 115 as an e-mail by use of SMPT. In an embodiment of advice administration computer 120 where receivers 135 can choose advice messages 200 belonging to certain classes, advice administration computer 120 can advantageously check whether any other receivers 135, authorised to receive advice message 200, have specified the classes to which the received advice message 200 belongs, and send advice message 200 to such receivers 135 as well.

In an alternative implementation of the invention, the sender client computer 110 sends the advice message 200 straight to receiver client computer(s) 115, with a copy to advice administration computer 120. The sending of advice message 200*ii* to receiver client computer 115 from advice administration computer 120 can then be omitted. However, advice message 200 could still be sent from advice administration computer 120 to other receivers 135 of receiver group 203.

In the embodiment illustrated in Fig. 7, the advice administration computer 120 then sends an advice message 200*iii* to the advice evaluation computer 305, the advice message 200*iii* comprising all or some of the information in advice message 200*i*. Advice message 200*iii* could include all information in advice message 200*i*, or part of the information in advice message 200*i*. In one embodiment, the sending of advice message 200*iii* is invoked by advice evaluation computer 305, *e.g.* following a trigger having been sent from advice administration computer 120 to the advice evaluation computer 305 indicating that there is a new advice message 200 to be evaluated, or following the expiration of a timer indicating that the advice evaluation computer 305 should invoke newly arrived advice messages 200 from advice administration computer 120. Such a timer could be part of an automatic job mechanism performed every few minutes, hourly, daily or at any other interval. In another embodiment, advice administration computer 120 automatically sends an advice message 200*iii* to the advice evaluation computer 305 upon reception of advice message 200*i* from a sender 110. Advice message 200*iii* can be transmitted from advice administration computer 120 to advice evaluation computer 305 as *e.g.* an e-mail by use of SMTP. However, any other appropriate transmission protocol could alternatively be used for the transmission of advice message *200iii* to advice evaluation computer 305. The reception of a an advice message 200*iii* can advantageously function as an instruction to advice evaluation computer 305 to run the criteria checking mechanism for the received advice message 200*iii*.

When advice evaluation computer 305 has received relevant information on an advice message 200, advice evaluation computer 305 advantageously performs, in criteria checking mechanism 325 by use of the relevant set of criteria 320 stored in memory 315, a criteria check of advice message 200. Preferably, criteria checking mechanism 325 will require information on records 240 stored in advice database 128, and/or supplemental information about advice message 200, in order to perform the criteria check. If so, criteria checking mechanism 325 can request information on such records 204 and/or supplemental information from advice administration computer 120 in one or several requests 703. Advice administration computer 120 then provides advice evaluation computer 305 with the requested information in one or several responses 705. Requests 703 and responses 705 can advantageously be transmitted by use of HTTP or HTTPS, although any suitable transmission protocol can be used.

The criteria check performed by advice criteria mechanism 325 preferably results in a q-value associated with the received advice message 200. As discussed above, the reception of an advice message 200 often causes changes to other q-values stored in the list of q-values 330. Therefore, the q-values which are affected by the receipt of advice message 200 are preferably re-calculated in criteria checking mechanism 325, and the list of q-values 330 updated accordingly. Depending on whether the condition 342 for generation of a system generated advice message is fulfilled, generation mechanism 335 will generate a system generated advice message 340. In Fig. 7, a system generated advice message 340 is transmitted from advice evaluation computer 305 to two different receiver client computers 115, out of which one is the receiver client computer 115 of receiver 135 of the received advice message 200.

However, system generated advice message 340 could be sent to any receiver 135 who is authorised to receive the system generated advice message 340, not necessarily including the receiver 135 of the received advice message 200.

**Referring back to Fig. 4b**, the criteria checking mechanism 325 should preferably have access to information on other advice messages 200 received from sender 135a and relating to advice object 205a of advice message 200a in order to perform the check of step 420. Hence, criteria checking mechanism 325 can send, to advice administration computer 120 in a request 703, a request for information on all records 240 in advice database 128 relating to the advice object 205a received from sender 135a in the last six months, including return figures or prices. The request 703 can either be sent before or after step 420 is entered. Alternatively, the analysis of advice messages 200 required in step 420 can be performed by advice administration computer 120, and the result can be sent to criteria checking mechanism 325. Similarly, in order to check advice message 200a against the criterion of step 430 of Fig. 4b, criteria checking mechanism 325 should preferably have access to information on all advice messages 200 received, in the last 14 days, within the financial sector of advice message 200a. Criteria checking mechanism 325 can send a request 703 to advice administration computer 120 for information regarding to which fmancial sector(s) advice message 200a belongs, if this information is not included in the advice message 200a. Having the information on fmancial sector(s) of advice message 200a, criteria checking mechanism 325 can send a request 703 to advice administration computer 120, requesting information on all advice messages 200 received in the last 14 days relating to the financial sector(s) of advice message 200a. These request(s) 703 can be sent either before or after step 430 has been entered. Alternatively, all advice messages 200 stored as records 240 in advice database 128 that advice generator computer 325 will require for performing actions in response to the receipt of an advice message 200a can be requested at once.

The sets of criteria 320 used by advice evaluation computer 305 could be input/changed by the receivers 135 via a user interface, such as *e.g.* a web-page. However, in order to obtain more optimised sets of criteria 320, the criteria generation computer 310 can advantageously be used for generating the sets of criteria 320. **Referring back to Fig. 3,** criteria generation computer 310 comprises a criteria optimisation mechanism 350 for optimising a set of criteria 320 by analysing the outcome of historical advice messages 200. In a preferred embodiment of the invention, criteria generation computer 310 has access to the advice messages 200 stored in advice database 128 for the optimisation of a set of criteria 320. However, criteria generation computer 310 could use any set of advice messages 200 for the optimisation of a set of criteria 320.

Criteria generation computer 310 further comprises a communication mechanism 355, for communicating with other entities within system 300 and entities connected to system 300. Communication mechanism 355 preferably comprises a web-server, providing, among other things, a user interface.

In a preferred embodiment of criteria generation computer 310, criteria generation computer 310 has access to the contents of advice database 128. Criteria generation computer 310 can use the information on advice messages 200 stored in advice database 128 as records 240, and information concerning the outcome of the advice contained in the advice messages 200 had the advice been followed, for obtaining an optimised set of criteria 320. Information concerning the outcome of the advice could either be stored in advice database 128, or could be fetched from an external source of information, either by advice administration server 120 (*cf*. external source of information 140 of Fig. 1) or by criteria generation computer 310. Such information concerning the outcome of the advice could *e.g.* be historical prices of advice objects 205.

In one embodiment of the invention, the criteria generation computer 310 comprises software so that an automatic job to optimise a set of criteria 320 can be set up. The instruction to start the optimisation of a set of criteria 320 can then be transmitted to criteria optimisation mechanism 350 via an internal interface. Preferably, several automatic jobs, to optimise different sets of criteria 320 associated with different receivers 135 or receiver groups 203, can be set up. An automatic job to optimise a set of criteria 320 could *e.g.* be performed every day, every week, or every fortnight. In another embodiment of the invention, the criteria optimisation mechanism 350 can be started via a user interface, or via either a user interface or via an internal instruction over an internal interface.

**A schematic flowchart illustrating an example of the optimisation performed by criteria optimisation mechanism 350 is shown in Fig. 8.** In the embodiment of the invention described in Fig. 8, which is a financial embodiment, the criteria generation computer 310 stores, in memory 360, for each set of criteria 320 that can be optimised in criteria generation computer 310, a start set of criteria 365. Furthermore, the criteria generation computer 310 stores, in memory 360, for each set of criteria 320 that can be optimised, a default investment condition 370. Investment condition 370 could advantageously be the same investment condition that is used to generate the investment recommendation 505 of a system generated advice message 340 in advice evaluation computer 305 (*cf.* Fig. 5), in implementations of the invention where such investment recommendations 505 are provided by system 300. Start set of criteria 365 and default investment condition 370 do not have to be stored in a memory 360 in criteria generation computer 310, but could be stored anywhere in system 300, or input to criteria optimisation mechanism every time a set of criteria 320 is to be optimised.

In step 800 of Fig. 8, the timer for the automatic job of criteria optimisation mechanism 350 to optimise a set of criteria 320, has lapsed, and the criteria optimisation mechanism 350 starts to run. In step 805, criteria optimisation mechanism 350 retrieves information on the advice messages 200 that should be used by the criteria optimisation mechanism 350, hereinafter referred to as the advice message basis for optimisation, which could *e.g.* be all the advice messages 200, received by the receivers 135 associated with set of criteria 320 to be optimised, within the last year. Furthermore, criteria optimisation mechanism 350 fetches the historical prices of the advice objects 205 to which the advice messages 200 of the advice message basis for optimisation relates. The advice message basis for optimisation, and/or the historical prices, could be fetched from the advice database 128, possibly in combination with other external sources. Moreover, in step 805, the start set of criteria 365 and the default investment condition 370 are fetched from memory 360.

Step 810 is then entered, in which a list of q-values and a fictive investment used for the optimisation process are reset. The re-setting of the fictive investment could involve emptying the fictive investment, or alternatively setting the fictive investment to a predefined start investment. Step 815 is then entered, in which the first advice message 200 in the advice message basis for optimisation is selected. Since the set of criteria 320 preferably refers to previously received advice messages 200, the first advice message 200 to be selected the first time step 815 is entered is preferably the oldest advice message 200 in the advice message basis for optimisation. In step 820, the list of q-values used for optimisation is updated. This updating involves calculating the q-value relating to the advice message 200 selected in step 815, *cf.* steps 415-440 of Fig. 4b, by use of the start set of criteria 365. The updating performed in step 820 further involves recalculating any q-values in the list of q-values used for optimisation that are affected by the addition of the advice message 200 selected in step 815 to the advice messages 200 upon which the list of q-values is based. Alternatively, the updating could involve the recalculating of all the q-values in the list of q-values used for optimisation. In step 825, it is checked whether the updating of the list of q-values used for optimisation causes any changes in the fictive investment by applying the default investment condition 370. If it is found that the fictive investment should change, step 830 is entered, in which the return-to-date of the fictive investment is calculated, taking into account the changes to the fictive investment determined in step 825 (the date being the date of original reception of advice message 200 selected in step 815). When the return-to-date of the fictive investment has been calculated, step 835 is entered. In step 835, the return-to-date as well as the fictive investment, including changes determined in step 825, are stored. Step 840 is then entered. Had it been determined in step 825 that the list of q-values used for optimisation, calculated in step 820, does not cause any changes to the fictive investment, step 840 would have been entered upon exiting step 825.

In step 840 it is checked whether the advice message 200 selected in step 815 is the last advice message 200 of the advice message basis for optimisation. If not, step 820 is entered, in which step the next advice message 200 in the advice message basis for optimisation is selected. The next advice message 200 to be selected is preferably the oldest advice message 200 in the advice message basis for optimisation for which steps 820-840 has not been run since step 810 was last entered. If it is found in step 840 that steps 820-840 have been run for all the advice messages 200 in the advice message basis for optimisation since step 810 was last entered, step 845 is entered.

In step 845, the final return-to-date of the changes to the fictive investment made by use of the set of criteria used in step 820 is stored, together with the set of criteria used in step 820. The final return-to-date is the return-to-date stored in step 835 for the last advice message selected in step 815. Step 850 is then entered, in which it is checked whether the optimisation of set of criteria 320 to be optimised is completed. If not, step 850 is entered, in which the set of criteria to be used in step 820 is altered. Step 810 is then re-entered. However, if it is found in step 850 that the optimisation is completed, step 860 is entered, in which the set of criteria yielding the most desirable final return-to-date, out of all the sets of criteria stored is step 845, is selected. In step 865, the optimal set of criteria, selected in step 860, is output from the criteria optimisation mechanism 350 as the optimised set of criteria 320. In one implementation of the criteria optimisation mechanism 350, the optimal set of criteria is stored as the start set of criteria 365, to be used when the set of criteria 320 is next due to be optimised.

The selection of the optimal set of criteria performed in step 860 is based on the final return-to-date. Other parameters may also be considered when selecting the optimal set of criteria, such as the risk of the fictive investment resulting from a set of criteria. The procedure of Fig. 8 would then include the assessment of risks. Furthermore, the robustness to small changes in optimisation variables of a set of criteria could also be considered when selecting the optimal set of criteria.

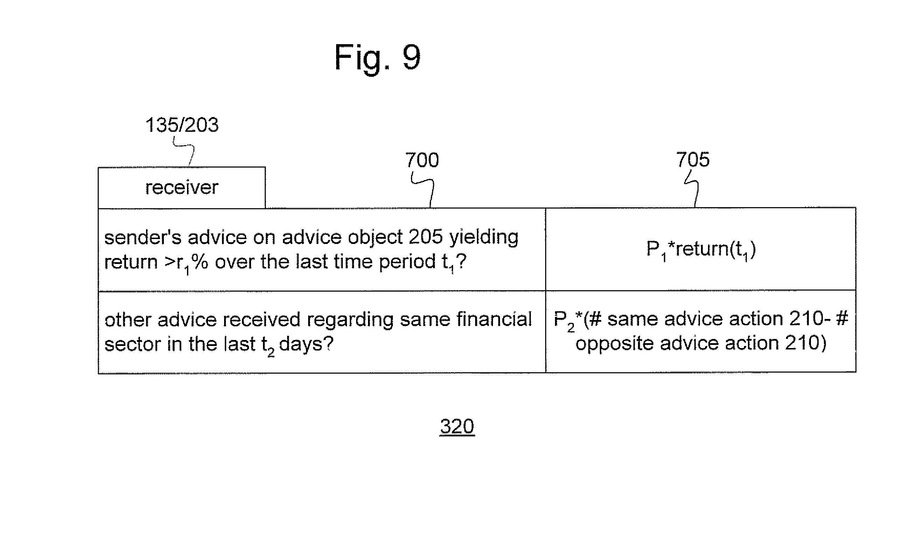

The method used by criteria optimisation mechanism 350 to select a new set of criteria in step 855 of Fig. 8 could be any suitable optimisation method. In one implementation of the optimisation mechanism 350, a plurality of pre-defined sets of criteria 320 is stored in memory 360 of criteria generation computer 310, and one of them is selected in step 855 of Fig. 8. The steps 810-855 are repeated until all of the sets of criteria 320 have been selected. In an alternative implementation, a set of criteria 320 having at least one optimisation variable is used, and a new value for the at least one optimisation variable is selected in step 855 of Fig. 8**. An illustration of one such set of criteria 320 is given in Fig. 9.** wherein a first criteria is "Has sender's advice on advice object 205 yielded a return greater than r₁% over the last time period t₁?" and a second criteria is "Have other advice messages 200 regarding the same financial sector been received in the last t₂ days?". The value to be added to the parameter q, should the first criteria be fulfilled, is "P₁ times the return yielded during the time period t₁", and the value to be added to the parameter q, should the second criteria be fulfilled, is "P₂ *(the number of advice messages 200 received in the same fmancial sector as advice object 205 in the last t₂ days relating to the same advice action 210 as advice message 200 - the number of advice messages 200 received in the same financial sector as advice object 205 in the last t₂ days relating to the opposite advice action 210 as advice message 200). Hence, the set of criteria 320 of Fig. 9 comprises the optimisation variables r₁, t₁, P₁, t₂ and P₂, which all can be varied in order to find values which yield the optimal final return-to-date of the advice message basis for optimisation. In this implementation, the optimal set of criteria output in step 870 of Fig. 8 could preferably be given as the optimal values of the optimisation variables.

There are many other ways in which the optimisation of the set of criteria 320 can be performed by criteria optimisation mechanism 350, and the optimisation process is not restricted to the example illustrated in Fig. 8. In one embodiment of criteria optimisation mechanism 350, criteria optimisation mechanism 350 analyses the variation of the prices of the advice objects 205 of the advice messages 200 included in the advice message basis for optimisation, and selects a fictive investment (as a function of time) comprising advice objects 205 which would have yielded a desirable return over a certain period of time. The set of criteria 320 is then selected so that the selected fictive investment would have been achieved, should the selected set of criteria 320 have been used in criteria checking mechanism 325.

In addition to optimising the set of criteria 320, criteria optimisation mechanism 350 could comprise software for optimising the investment condition 370, e.g. in a procedure similar to the procedure illustrated by Fig. 8. An optimised investment condition 370 could then advantageously be transmitted to advice evaluation computer 305, to be used in generating investment recommendations 505.

Criteria generation computer 310 could comprise a database for storing optimal sets of criteria 320, so that a user of system 300 easily can access the sets of criteria 320 that were found to be optimal by the criteria optimisation mechanism 350 at different points in time. Furthermore, the communication mechanism 355 could preferably comprise a user interface for inputting start sets of criteria, boundaries for any optimisation variables in the sets of criteria, investment conditions *etc.*

As has been discussed above in relation to the accompanying figures, the advice administration computer 120, the advice evaluation computer 305 and the criteria generation computer 310 can advantageously be interconnected in a system 300 for investment decision support. To interconnect the advice administration computer 120, the advice evaluation computer 305 and the criteria generation computer 310 has many advantages, such as providing an updated advice database 128 to the advice evaluation computer 305 and the criteria generation computer 310, and providing an optimal set of criteria 320 to advice evaluation computer 305 from criteria generation computer 310. However, advice administration computer 120, advice evaluation computer 305 and criteria generation computer 310 can all be implemented to operate independently of one another. If advice evaluation computer 305 and/or criteria generation computer 310 were implemented as separate entities, advice evaluation computer 305 and/or criteria generation computer 310 could have their/its own advice database 128. This advice database 128 could then either be updated manually, or updated from time to time via a temporary connection to an advice database 128 of an advice administration computer 120. Even in a situation when advice evaluation computer 305 and/or criteria generation computer 310 are part of a system 300, advice evaluation computer 305 and/or criteria generation computer 310 could store an internal copy of advice database 128. If an internal copy of advice database 128 is stored locally in advice evaluation computer 305 and/or criteria generation computer 310 as a replica of advice database 128 in advice administration database 120, the replica database could preferably be updated from time to time.

Sender 130 of an advice message 200 and receiver 135 of an advice message 200 have in the above description been illustrated to be different persons. However, in some situations, an investor/receiver 135 or an advisor/sender 130 may want to check his own ideas/advice messages 200 in the advice evaluation computer 305.

In the above, for purposes of illustration only, system 300 for investment decision support has been described in terms of three separate functional units: advice administration computer 120, advice evaluation computer 305 and criteria generation computer 310. Advice administration computer 120, advice evaluation computer 305 and criteria generation computer 310 could alternatively be located at the same physical location and be run on the same processor(s), using the same hardware and/or software. For example, advice database 128 and evaluation database 333 could use the same physical computer hardware: A single physical database computer could *e.g.* be used for the implementation of advice database 128 and evaluation database 333. The same software, or software and hardware, could advantageously be used for the criteria checking mechanism 325 of advice evaluation computer 305 and the steps 815-823 and 840 in the embodiment of the criteria optimisation mechanism 350 illustrated in Fig. 8. Communication mechanisms 125, 345 and 355 can be implemented as separate communication mechanisms, or a communication mechanism common to all three of advice administration computer 120, advice evaluation computer 305 and the criteria generation computer 310, or to any two of these computers, *etc.* In one embodiment of the invention, the advice administration computer 120, the advice evaluation computer 305 and the criteria generation computer could be implemented on the same physical computer, such as *e.g.* a personal computer.

Similarly, in the above description, the advice administration computer 120, the advice evaluation computer 305 and the criteria generation computer 310 have been illustrated to be confined to one computer for purposes of illustration. However, in many implementations of the invention, a computer 120, 305 or 310 will be implemented on a system of more than one computer, and the functionality of a computer 120, 305 and 310 will be spread out on different physical locations and run on different processors. In other implementations, a computer 120, 305 or 310 will be implemented in a single computer, such as *e.g.* a personal computer.

One skilled in the art will appreciate that the present invention is not limited to the embodiments disclosed in the accompanying drawings and the foregoing detailed description, which are presented for purposes of illustration only, but it can be implemented in a number of different ways, and it is defined by the following claims.

## Claims

1. A computer arrangement (300;305) for investment decision support, wherein the computer arrangement has access to an advice database (128) comprising a plurality of records (240) for storing advice messages (200) representing pieces of investment advice;
**characterised by**:
an interface (345) operable to receive an advice message (200) to be evaluated in the computer arrangement;
storage (315, 333) adapted to store a set of criteria having at least one variable parameter; and
an advice evaluation mechanism (310, 325) coupled to the storage and to the advice database, the advice evaluation mechanism being operable to
evaluate the advice message by determining the value of the at least one variable parameter in response to the received advice message and checking whether the plurality of records fulfil the set of criteria; and to
generate an evaluation result (q, 330, 340) based on the result of said checking.

2. The computer arrangement of claim 1, wherein the advice evaluation mechanism (325) is further operable to, in response to receiving the advice message,
identify at least one further advice message to be evaluated by the advice
evaluation mechanism, and for each identified advice message:
determine the value of the at least one variable parameter in response to the identified further advice message;
check whether the plurality of records fulfil the set of criteria;
generate a further criteria checking result; and wherein the advice evaluation mechanism is further operable to
generate the evaluation result further based on the at least one further criteria checking result.

3. The computer arrangement of claim 1 or 2, further comprising
storage for storing a condition (342) for generating a system generated advice message (340); and
a condition checking mechanism (335) operable to check whether said evaluation result fulfils said condition for generating a system generated advice message; wherein
the computer arrangement (310, 335) is operable to generate a system generated advice message (340) based on the evaluation result when the evaluation result fulfils the condition for generating a system generated advice message; and
the computer arrangement comprises an interface (345) operable to output the system generated advice message.

4. The computer arrangement of anyone of claims 1-3, further comprising
storage (315, 333) for a list of criteria checking results (330), a criteria checking result (q) in the list of criteria checking results resulting from an advice message having been checked by the advice evaluation mechanism; and wherein
the advice evaluation mechanism is further operable to store the result of the checking in the list of criteria checking results, the list of criteria checking results forming part of said evaluation result.

5. The computer arrangement of anyone of claims 1-4, wherein
the computer arrangement is further operable to receive, via an interface (345), a set of criteria to be used by said advice evaluation mechanism.

6. The computer arrangement of anyone of claims 1-5, wherein
the computer arrangement comprises storage for a plurality of sets of criteria, a set of criteria being associated with a user (135) or a group of users (203) of the computer arrangement.

7. A computer arrangement (300; 310) for investment decision support having access to an advice database (128) comprising a plurality of records (240), wherein a record comprises storage for storing information on an advice object (205) of a piece of investment advice and storage for storing information on the time of reception (215) of the piece of investment advice, the computer arrangement further comprising an input for receiving information on the prices of different advice objects at different points in time;
**characterised by**
storage (370) for an investment condition; and
a criteria optimisation mechanism (310, 350) operable to optimise a set of criteria (320) for evaluating a piece of investment advice, the optimisation mechanism being operable to use records of the advice database, in combination with the investment condition and information on the historical prices at different points in time of the advice objects of the used records, in order to generate an optimised set of criteria.

8. The computer arrangement of claim 7, wherein the criteria optimisation mechanism is operable to optimise the set of criteria by repeatedly:
checking a plurality of advice objects of records retrieved from the advice database against an interim set of criteria (365), thus obtaining a plurality of criteria checking results (q);
temporarily selecting advice objects in response to said plurality of criteria checking results by applying the investment condition;
generating a measure of the return of the temporarily selected advice objects by use of the information on the historical prices at different points in time of said temporarily selected advice objects; and
selecting a new interim set of criteria;
and wherein said criteria optimisation mechanism is further operable to identify an optimal interim set of criteria, yielding an optimal return, and to select said optimal interim set of criteria as the optimised set of criteria.

9. The computer arrangement of claim 7, wherein the criteria optimisation mechanism is operable to optimise the set of criteria by checking the price, at different historical times, of advice objects of records retrieved from the advice database; identifying at least one advice object that would have yielded a desirable economic return during a period of time; and adapting the set of criteria so that, by application of the set of criteria in combination with the investment condition on the retrieved advice objects, the at least one identified advice object would have been selected during the period of time when the at least one identified advice object would have yielded a desirable economic return.

10. The computer arrangement of anyone of claims 7-9, wherein
said optimisation mechanism is further operable to optimise said investment condition.

11. A computer system for investment decision support comprising the computer arrangement of anyone of claims 1-6 coupled to the computer arrangement of anyone of claims 7-10 in a manner so that the criteria optimisation mechanism is operable to send the optimised set of criteria to the advice evaluation mechanism.

12. A method of evaluating investment advice in a computer arrangement having access to an advice database (128) comprising a plurality of records (240) for storing advice messages (200) representing pieces of investment advice, the method being
**characterised by**:
receiving a set of criteria (320) having at least one variable parameter;
storing the set of criteria (320) in a storage (315, 333);
receiving an advice message (200) to be evaluated by use of the set of criteria;
determining the value of the at least one variable parameter in response to the received advice message;
checking whether the plurality of records fulfil the set of criteria; and
generating an evaluation result (q, 330, 340) based on the result of the checking.

13. The method of claim 12, further comprising:
identifying at least one further advice message to be evaluated by the advice evaluation mechanism, and for each identified advice message:
determining the value of the at least one variable parameter in response to the identified further advice message;
checking whether the plurality of records fulfil the set of criteria; and
generating a further criteria checking result; and wherein
the evaluation result generated in the step of generating is further based on the at least one further criteria checking result.

14. The method of claim 12 or 13, further comprising
checking whether the evaluation result fulfils a condition (342) for generating a system generated advice message stored in said computer arrangement; and
generating a system generated advice message (340) based on the evaluation result if the evaluation result fulfils the condition for generating a system generated advice message.

15. The method of anyone of claims 12-14, further comprising
storing the result from the advice message having been evaluated by the advice evaluation mechanism in a list of criteria checking results.

16. A computer program product comprising
computer code operable to execute the method of any of claims 12-15 when run on a computer arrangement.

17. A method of investment decision support in a computer arrangement (300, 310) having access to an advice database (128) comprising a plurality of records (240), wherein a record comprises storage for storing information on an advice object (205) of a piece of investment advice and storage for storing information on the time of reception (215) of the piece of investment advice, **characterised by**:
receiving, in the computer arrangement, an instruction to optimise a set of criteria to be used for evaluation of investment advice;
retrieving, from the advice database, a plurality of records, said records comprising information on advice objects (205); and
optimising the set of criteria to be optimised by use of the plurality of records in the advice database in combination with an investment condition and information on the historical prices at different points in time of the advice objects of the plurality of records so as to generate an optimal set of criteria.

18. The method of claim 17, wherein the generation of an optimised set of criteria comprises the repetition of steps a) to d):
a) checking the advice objects of the plurality of records against an interim set of criteria (365), and generating a plurality of criteria checking results in response to the checking;
b) temporarily selecting advice objects by applying the investment condition on the plurality of criteria checking results;
c) generating a measure of the return of the temporarily selected advice objects by use of the information on the historical prices at different points in time of said temporarily selected advice objects; and
d) selecting a new interim set of criteria;
until an optimal interim set of criteria, yielding an optimal return, can be identified; and wherein the method further comprises
selecting the optimal interim set of criteria as the optimal set of criteria.

19. The method of claim 17, wherein the generation of an optimised set of criteria comprises
checking the price, at different historical points in time times, of the advice objects of the plurality of records to identify at least one advice object that would have yielded a desirable economic return during a period of time; and
adapting the set of criteria so that, by application of the set of criteria in combination with the investment condition on the plurality of advice objects, the at least one identified advice object would have been selected during the period of time when the at least one identified advice object would have yielded a desirable economic return.

20. The method of anyone of claims 17-19, wherein
said receiving an instruction comprises receiving, via an internal interface, an instruction which has been automatically generated within the computer arrangement.

21. The method of anyone of claims 17-20 further comprising the method of anyone of claims 12-15, wherein the step of receiving a set of criteria (320) comprises receiving the optimal set of criteria generated in the step of optimising.

22. A computer program product comprising
computer code operable to execute the method of anyone of claims 17-21 when run on a computer arrangement.
